# EUROPÄISCHE PATENTANMELDUNG

(11) **EP 1 881 579 A1**
(43) Veröffentlichungstag der Anmeldung: **23.01.2008**
(21) Anmeldenummer: 06015188.3
(22) Anmeldetag: 21.07.2006
(51) Int. Cl.: H02G 9/10, G02B 6/44, E02D 29/12

(54) **Kabelschacht**

(71) Anmelder: ROMOLD GmbH, 83395 Freilassing (DE)
(72) Erfinder: Ebner, Friedrich, 5421 Adnet (AT)
(74) Vertreter: Gähr, Hans-Dieter

(57) **Zusammenfassung**

Kabelschächte sind Tiefbauteile, die Verwendung in Leitungsnetzen der Stromversorgung, von elektronischen Steuerungssystemen oder Telekommunikationssystemen finden. Bekannte Kabelschächte aus Kunststoff bestehen aus Einzel- und/oder Gesamtkomponenten die mit einem diskontinuierlichen Produktionsverfahren z.B. im Spritzguss-Verfahren hergestellt sind. Die in verschiedenen Ländern verwendeten Schachtabdeckungen unterscheiden sich in ihren Abmessungen beträchtlich, so dass der Einsatz von Kabelschächten mit fixen Komponenten nur in einem spezifischen Abmessungsraster möglich ist.
Bei dem neuen Kabelschacht werden die Wandprofile (1) in einem kontinuierlichen Produktionsverfahren z.B. im Extrusionsverfahren hergestellt. Die Wandprofile (1) werden individuell auf die erforderlichen Schachtabmessungen abgelängt und über Eckelemente (2) und Verbindungselemente (3) zu einem Kabelschacht verbunden. Diese Verbindung in vertikaler Richtung kann nach dem Einbau des Kabelschachtes wieder gelöst werden. Müssen nachträglich Leitungsstränge abgeteilt oder weitere Leitungen gelegt werden wird der Schacht in horizontaler Richtung geteilt und nach der Anbindung wieder zusammengefügt. Des Weiteren ermöglicht die Hohlkammergeometrie der Wandprofile (1), dass Verstärkungsprofile (6) zur Aussteifung des Kabelschachtes eingeschoben werden können.

## Beschreibung

Die Erfindung betrifft einen Kabelschacht.
Kabelschächte sind Tiefbauteile, die Verwendung in Leitungsnetzen der Stromversorgung, von elektronischen Steuerungssystemen oder Telekommunikationssystemen finden. Sie bestehen aus einem Grundkörper oder Einzelkomponenten dieses Grundkörpers, bevorzugt aus Kunststoff, einem Ausgleichsrahmen und einer Schachtabdeckung. Die Kabelschächte bilden zusammen mit Kabelleerrohren, bevorzugt aus Kunststoff, Zugangsvoraussetzungen zu den Leitungsnetzen für deren Neubau, Wartung und Reparatur. Sie werden vorwiegend unterirdisch eingebaut, wobei die Schachtabdeckung als oberer Abschluss zur Geländeoberfläche dient und im Bedarfsfall geöffnet werden kann.

Die Schachtabdeckung dient einerseits zum Verschließen der Schächte gegen unbefugten Zugang zur Versorgungsleitung, andererseits dient sie zur Abtragung der Verkehrslasten. Auf die Schachtwand wirken in horizontaler Richtung primär der Erddruck und/oder Verkehrsbelastungen von seitlich an dem Schacht vorbeifahrenden Fahrzeugen im Baustellenzustand. Je nach Einbausituation können zusätzlich auch Belastungen in vertikaler Richtung auftreten z.B. durch darüber fahrende Fahrzeuge.

Aus DE 196 34 960 A1 und DE GM 81 26 305 U1 ist bekannt, dass der Höhenausgleich und die Niveau-Einstellung von Kabelschächten und Schachtabdeckungen zur Geländeoberfläche durch eine Höhenausgleichseinrichtung mittels Gewindestiften erfolgt. Der entstandene Zwischenraum wird zur Lastenübertragung vorzugsweise mit Zementmörtel ausgegossen.

Des Weiteren sind Kabelschachtsysteme bekannt, die über fixe Einzel- und/oder Gesamtkomponenten verfügen. Diese Komponenten sind mit einem diskontinuierlichen Produktionsverfahren z.B. im Spritzguss-Verfahren hergestellt und können in ihrer Größe nachträglich nicht mehr verändert werden. Die in verschiedenen Ländern verwendeten Schachtabdeckungen unterscheiden sich in ihren Abmessungen beträchtlich, da es keine länderübergreifenden Normen bezüglich der Abmessungen gibt. Eine Verwendung der fixen Kabelschachtkomponenten ist nur in einem spezifischen Abmessungsraster möglich. Die Mehrfachverwendung dieser Kabelschacht-Bauteile kann nur in sehr begrenztem Umfang erfolgen zum Beispiel, wenn es sich um identische Schachtabmessungen bzw. identische Schachtabdeckungen handelt.

Es sind Wandprofile bestehender Kabelschachtsysteme bekannt, die an der Schachtinnenseite oder Schachtaußenseite senkrecht zur Schachtwand verlaufende Rippen aufweisen. Müssen diese Kabelschachtwände zusätzlich versteift werden, ist dies in horizontaler Richtung nur möglich, indem Verstärkungsprofile an der jeweils glatten, ohne Rippen ausgestatteten Wandseite angebracht werden.

Die Wandprofile der auf dem Markt bekannten Kabelschachtsysteme aus Kunststoff sind an einer Seite des Profils offen, damit sie im Herstellungsprozess entformt werden können. Dies wirkt sich nachteilig auf die Festigkeit der Profile aus. Eine zusätzliche Aussteifung dieser Kabelschachtsysteme erfolgt in der Regel, indem an der inneren Schachtwand Metallprofile befestigt werden. Dies bewirkt aber eine Verringerung bzw. Einschnürung der inneren Schachtabmessungen.

Gängige Kabelschachtsysteme können nach dem Einbau nicht oder nur mit großem Aufwand wieder geteilt werden. Wenn nachträglich Leitungsstränge abgeteilt oder weitere Leitungen gelegt werden müssen, für die keine Leerrohre an geeigneter Stelle vorgesehen sind, muss somit in den meisten Fällen der gesamte Schacht ausgetauscht werden.

Der Erfindung liegt daher die Aufgabe zugrunde, einen Kabelschacht zu schaffen, der sich hinsichtlich der kostengünstigen und einfachen Herstellung, der Variabilität des Einsatzes der Kabelschachtkomponenten im Hinblick auf unterschiedliche Schachtabmessungen, der flexiblen Handhabung im Einbauzustand und der physikalischen Eigenschaften deutlich von den bestehenden Kabelschachtsystemen abhebt.

Diese Aufgabe wird erfindungsgemäß durch die Merkmale des Anspruchs 1 gelöst. Vorteilhafte Ausgestaltungen der Erfindung sind in den Unteransprüchen gekennzeichnet.

Bei dem erfindungsgemäßen Kabelschacht besteht der Grundkörper aus Wandprofilen, Eckelementen, Verbindungselementen und bei Bedarf einer Bodenplatte. Die Teile werden bevorzugt aus Kunststoff hergestellt, es sind aber auch andere Werkstoffe, wie zum Beispiel Aluminium denkbar. Von Vorteil ist dabei, dass die Wandprofile als Rechteckprofile im Extrusions- oder Pultrusions-Verfahren endlos hergestellt und nachträglich auf jede beliebige Länge abgelängt werden können. Im Zusammenspiel mit den Eckelementen kann sehr individuell jede beliebige rechteckige oder quadratische Schachtabmessung erreicht werden. Das Wandprofil wird bevorzugt in zwei verschiedenen Höhen hergestellt. So ist sichergestellt, dass zwei Wandprofil-Varianten ausreichen, um Kabelschächte mit verschiedenen Abmessungen zu fertigen. Es sind nur zwei Werkzeuge bzw. Düsen nötig um die Wandprofile zu fertigen. Dies bedeutet einen erheblichen Kostenvorteil in der Herstellung. Die Schachthöhe kann an die geforderte Bauhöhe durch die Kombination der beiden unterschiedlich hohen Wandprofile angepasst werden. Eine Feinjustierung der Schachthöhe zur Anpassung an die Geländeoberfläche erfolgt mittels der Stellschrauben, die mit einem Ausgleichsrahmen verbunden werden.

Das Wandprofil weist in einer Ausführungsform eine in Längsrichtung des Profils verlaufende durchgängige Hohlkammergeometrie auf. Es sind hierbei unterschiedliche Geometrien möglich. Durch diese durchgängige Hohlkammergeometrie können bei Bedarf zur Aussteifung der Seitenwände Verstärkungsprofile in eine oder mehrere horizontale Hohlkammern eingeschoben werden. Dies erhöht die Steifigkeit der Schachtwand in horizontaler wie auch in vertikaler Richtung. Eine Aussteifung ist bei größeren Schachtabmessungen erforderlich. Je nach Einbausituation wirken horizontale Belastungen durch das Erdreich und/oder Verkehrsbelastungen von seitlich an dem Schacht vorbeifahrenden Fahrzeugen im Baustellenzustand. In vertikaler Richtung wirken hohe Belastungen durch das Überfahren des Schachtes im fließenden Straßenverkehr. Durch das Einschieben der Verstärkungsprofile kann je nach Belastungszustand und Schachtabmessung die Steifigkeit der Wandprofile individuell erhöht werden. Die Verstärkungsprofile bestehen vorrangig aus Kunststoff, es sind aber auch Verstärkungsprofile aus anderen Werkstoffen denkbar. Die Verstärkungsprofile sind bevorzugt als Rechteck-, U- oder T-Profil ausgeführt, sie können aber auch jede andere Geometrie aufweisen. Die Verstärkungsprofile werden bei der Montage des Kabelschachtes in die Hohlkammern eingeschoben. Ein Vorteil ist dabei, das sie innerhalb der Wandgeometrie verschwinden und von außen nicht mehr sichtbar sind. Die innere Querschnittsfläche des Kabelschachtes verringert sich durch die erfolgte Verstärkung nicht. Es ist aber ebenso denkbar, die Wandprofile als offenes Profil herzustellen und die Verstärkungsprofile innerhalb des offenen Profils anzubringen.

Ein Vorteil des vorliegenden Kabelschachtes ist die über den gesamten Umfang geschlossene Geometrie des Wandprofils. Dies bewirkt eine hohe Stabilität. Glatte oder nur mit kleinen Rippen versehene Schachtaußenwände erleichtern das Verfüllen und Verdichten des Erdreiches rund um den Schacht.

Eine weitere vorteilhafte Ausgestaltung der Erfindung ist der einseitig ausgeformte Anschlag an der unteren Außenseite des Wandprofils. Es ist aber ebenso ein beidseitiger Anschlag oder eine mittige Profilverbindung in Form einer Nut-Feder-Verbindung an der Unter- bzw. Oberseite des Profils denkbar. Der einseitig ausgeformte Anschlag zentriert die aus mehreren Profillagen bestehende Schachtwand bei einseitiger, horizontaler Belastung, z.B. Erddruck, oder Belastungen beim Verfüllen und Verdichten der Schächte. Damit wird gewährleistet, dass die Wandprofile senkrecht übereinander fluchten. Gleichzeitig bewirkt der Anschlag bei einseitiger horizontaler Belastung der Wandseite von außen eine Verteilung der Belastung auf mindestens zwei oder mehr Profile und es entsteht eine Verbundwirkung. Bei dem untersten Wandprofil dient der Anschlag bei Verwendung einer Bodenplatte als Fixierung und Randbegrenzung. Dadurch wird einerseits eine genaue Positionierung der Bodenplatte während der Montage erreicht, andererseits wird eine zusätzliche Aussteifung des untersten Wandprofils in horizontaler Richtung erzielt und die mögliche Durchbiegung in Längsrichtung begrenzt.

Eine vorteilhafte Ausgestaltung der Erfindung ist die beim Eckelement horizontale Steckverbindung in Form eines Einschubs in die Wandprofile. Bei ausreichender Einstecktiefe bewirkt diese horizontale Steckverbindung eine zusätzliche Stabilität des Kabelschachtes.

Die Erfindung wird nachfolgend anhand einer Ausführungsform mit Bezug auf die Figuren 1 bis 7 erläutert. Es zeigen:
Fig. 1 eine Systemdarstellung des Kabelschacht-Grundkörpers mit Wandprofilen, Eckelementen und Bodenplatte;
Fig. 2 einen vertikalen Schnitt durch ein Wandprofil mit Verstärkungsprofil;
Fig. 3 eine perspektivische Ansicht des Eckelementes;
Fig. 4 eine perspektivische Ansicht des Verbindungselementes;
Fig. 5 eine perspektivische Ansicht des Montagezustandes mit Wandprofil, Eckelement, Verbindungselement und Befestigungsklammer;
Fig. 6 eine perspektivische Ansicht eines vertikalen Schnittes durch das oberste Wandprofil und die Eckelemente;
Fig. 7 einen Vertikalschnitt der Einbausituation des Kabelschacht-Grundkörpers mit Ausgleichsrahmen , Stellschraube und Schachtabdeckung.

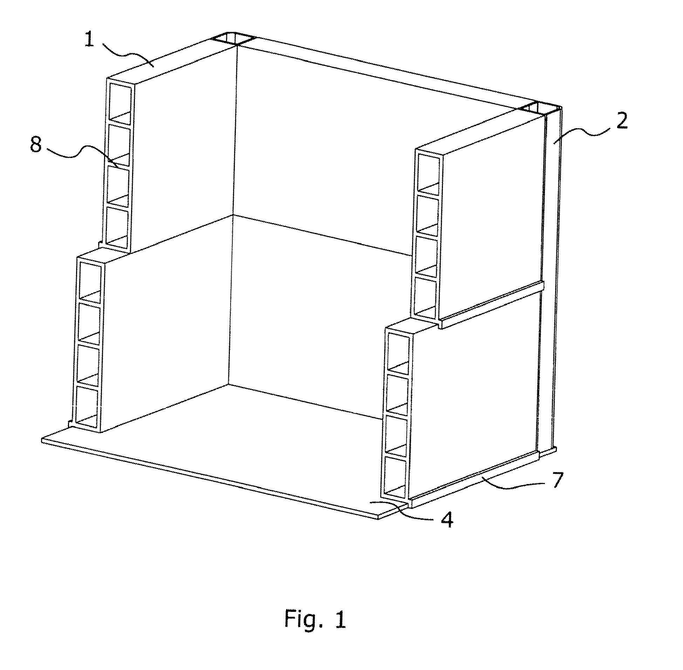

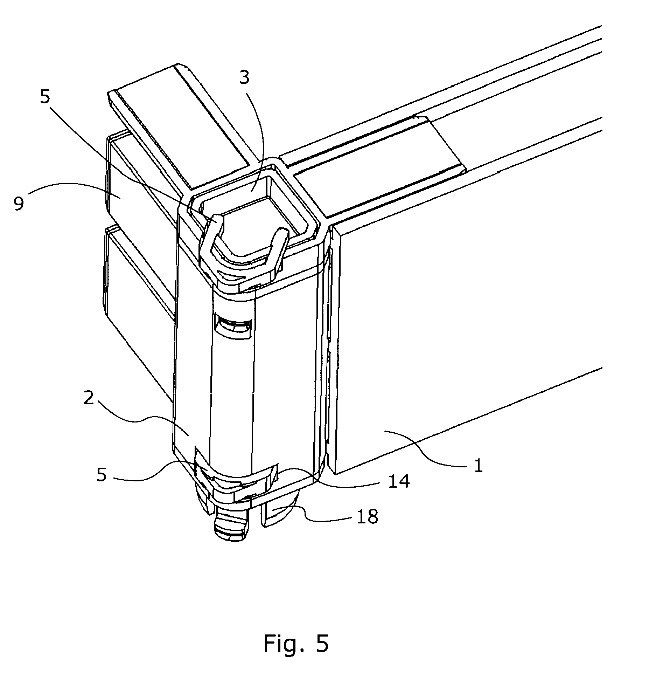

In Fig. 1 ist der Grundkörper des Kabelschachtes, hier bestehend aus zwei Profillagen, schematisch dargestellt. Er besteht aus der Bodenplatte 4, den Wandprofilen 1 und den Eckelementen 2. In der praktischen Nutzung werden mehrere Profillagen übereinander angeordnet. Die Verbindungselemente 3 (siehe Fig. 5) sind im Einbauzustand von außen nur teilweise sichtbar. Es sind Wandprofile 1 mit drei horizontalen Querstegen 8 im Wandprofil dargestellt. Dadurch ergeben sich vier horizontal verlaufende durchgängige Hohlkammern. An der unteren Außenseite der Wandprofile 1 befindet sich ein angeformter Anschlag 7. Er ermöglicht einerseits eine genaue Positionierung der Bodenplatte 4 während der Montage, andererseits wird eine zusätzliche Aussteifung des untersten Wandprofils 1 in horizontaler Richtung erzielt und die mögliche Durchbiegung in Längsrichtung begrenzt. Er zentriert ebenfalls die aus mehreren Profillagen bestehende Schachtwand bei einseitiger, horizontaler Belastung. Die Schachtwände weisen durch die im Ausführungsbeispiel dargestellte Art der Konstruktion eine innen und außen glatte, geschlossene Geometrie auf.

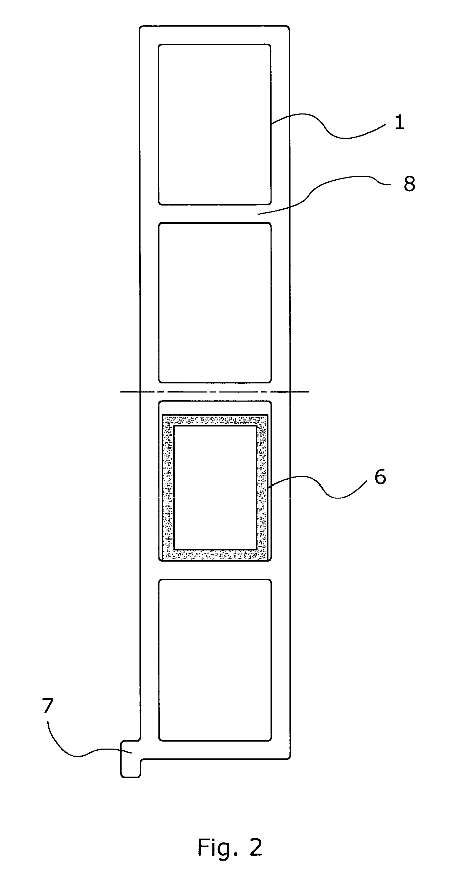

Die Fig. 2 zeigt einen vertikalen Schnitt durch ein Wandprofil 1 mit drei horizontalen Querstegen 8. In eine Hohlkammer ist ein Verstärkungsprofil 6 eingeschoben. Das Verstärkungsprofil 6 ist als Rechteckprofil dargestellt. Es ist aber ebenso ein U- , T-Profil oder sonstiges Profil denkbar.

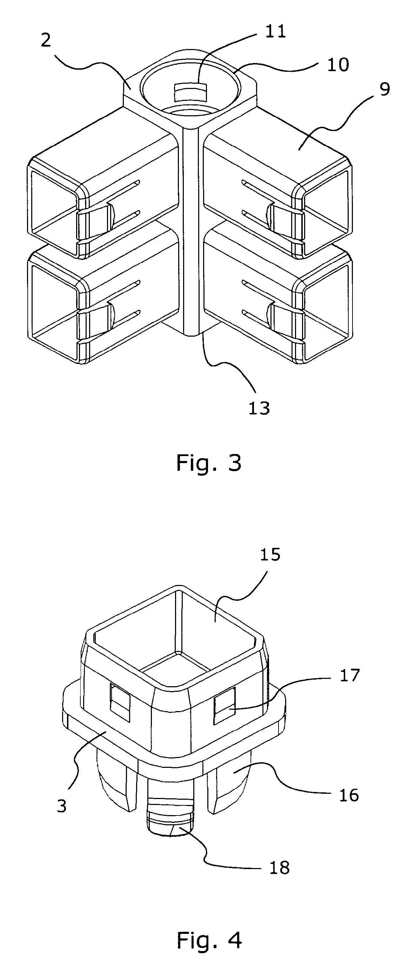

Fig. 3 zeigt ein Eckelement 2 und Fig. 4 zeigt ein Verbindungselement 3. Beide Teile sind bevorzugt aus Kunststoffspritzguss ausgeführt. Das Eckelement 2 verfügt über je zwei horizontale Einsteckprofile 9, die um 90° versetzt zueinander angeordnet sind. Sie dienen der horizontalen Verbindung der Wandprofile 1 (siehe Fig. 5) und werden in die Hohlkammern der Wandprofile eingeschoben. Die vertikale Verbindung der Eckelemente 2 untereinander erfolgt durch die Verbindungselemente 3. Das Eckelement 2 weist oben eine kreisrunde Öffnung mit Positionszentrierung 10 auf. Innen liegend befindet sich eine Nut 11. Das Verbindungselement 3 weist unten eine kreisrunde Geometrie 16 auf und verfügt über einen Schnappverschluss 18. Beim Zusammenfügen des Eckelementes 2 mit dem Verbindungselement 3 rastet der Schnappverschluss 18 in die Nut 11 des Eckelementes 2 ein. Diese stabile Verbindung kann nur mit einem Werkzeug gelöst werden. An der Unterseite besitzt das Eckelement 2 eine rechteckige Öffnung mit Positionszentrierung 13. Das Verbindungselement 3 besitzt oben eine rechteckige Geometrie 15 und wird von unten in das Eckelement 2 geschoben. Diese Verbindung wird längskraftschlüssig mit einer Befestigungsklammer 5 fixiert (siehe Fig. 5). Zum Einführen der Befestigungsklammer 5 befindet sich am Eckelement 2 unten an seinen beiden über Eck liegenden Außenflächen jeweils ein Steckschlitz 14 (siehe Fig. 5). Am Verbindungselement 3 befindet sich entsprechend oben jeweils ein Steckschlitz 17 über Eck. Die Befestigungsklammer 5 kann manuell gelöst werden. Dadurch kann der Schachtgrundkörper für spezielle Anwendungen auf der Baustelle wieder geteilt werden, z.B. um Rohrleitungen anzubinden. Nach der erfolgten Anbindung werden die beiden horizontal getrennten Schachthälften über die Rechteckverbindung zwischen Eckelement 2 unten und Verbindungselement 3 oben zusammengefügt und erneut mit einer Befestigungsklammer 5 fixiert. Durch die unterschiedliche Geometrie der Verbindungsöffnungen des Eckelementes 2 werden Montagefehler mit dem Verbindungselement 3 ausgeschlossen. Bevorzugt werden eine rechteckige und eine kreisrunde Geometrie verwendet, es ist aber auch jegliche andere Geometrie denkbar.

Fig. 5 zeigt die Befestigungsklammer 5 in eingeschobenem Zustand. Im Schnitt oben ist die längskraftschlüssige Verbindung durch die Befestigungsklammer 5 zwischen dem Eckelement 2 und dem Verbindungselement 3 sichtbar.

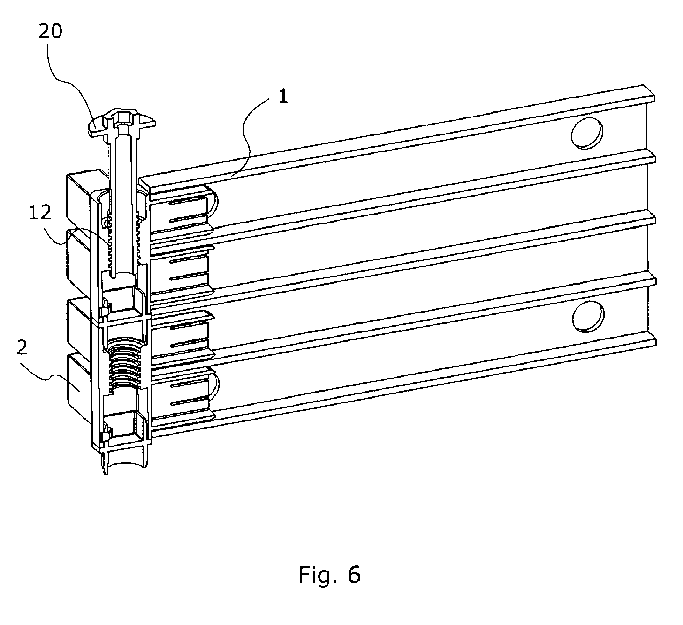

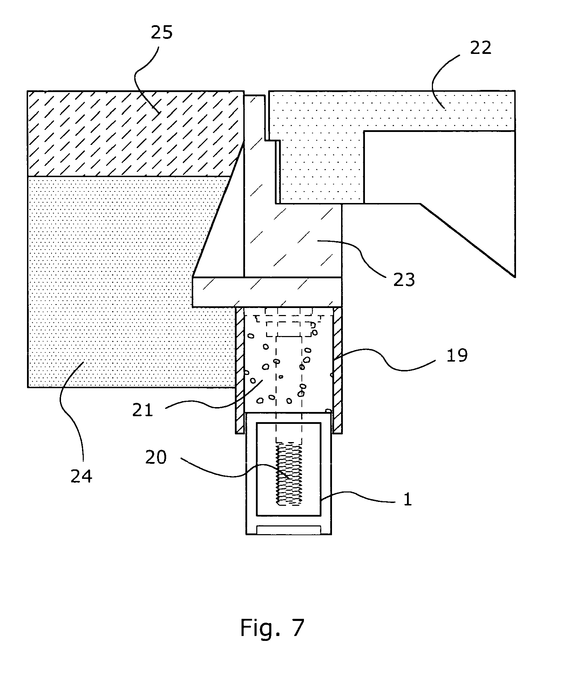

In Fig. 6 ist die Funktion der obersten Profillage dargestellt. Über die Stellschraube 20 wird die Verbindung mit dem Ausgleichsrahmen 19 hergestellt (siehe Fig. 7). Das Innengewinde 12 im Eckelement 2 wird nur in der obersten Profillage genutzt. Bei den darunter liegenden Profillagen bleibt das Innengewinde 12 ungenutzt. Es wird dadurch nur eine Ausführung des Eckelements 2 benötigt. Für die Fertigung fallen somit nur die Kosten für ein Spritzguss-Werkzeug an. Die Montage wird durch die Verwendung gleicher Eckelemente 2 für alle Anwendungen erleichtert. Das Innengewinde 12 wird bevorzugt mittig ausgeführt.

Fig. 7 zeigt einen Vertikalschnitt der Einbausituation des Kabelschachtes in einem Straßenverlauf. Es sind aber ebenso andere Geländeoberflächen möglich. Der Straßenaufbau ist hier dargestellt mit einer Tragschicht 24 und einer Deckschicht 25. Die oberste Profillage des Kabelschachtgrundkörpers wird über je eine Stellschraube 20 an jeder Ecke mittels des Innengewindes 12 der Eckelemente 2 mit dem Ausgleichsrahmen 19 verbunden. Der Ausgleichsrahmen 19 wird über die Stellschrauben 20 an die bestehende oder geplante Geländeoberkante angepasst. Der Zwischenraum des Ausgleichrahmens 19 wird zur Lastenübertragung zwischen den Wandprofilen 1 und dem Ausgleichsrahmen 19 mit Fließmörtel 21 ausgefüllt. Es schließt sich eine handelsübliche Schachtabdeckung 22 mit Rahmen 23 an. Es ist aber ebenso eine Schachtabdeckung ohne Rahmen möglich.

## Patentansprüche

1. Kabelschacht bestehend aus
a) Wandprofilen (1), die als Rechteckprofile in einem kontinuierlichen Produktionsverfahren gefertigt sind,
b) Eckelementen (2) zur horizontalen Verbindung der Wandprofile (1) und
c) Verbindungselementen (3) zur vertikalen Verbindung der Eckelemente (2).

2. Kabelschacht nach Anspruch 1, **dadurch gekennzeichnet, dass** die Wandprofile (1) im Extrusions- oder Pultrusions-Verfahren hergestellte Teile aus Kunststoff sind.

3. Kabelschacht nach Anspruch 1, **dadurch gekennzeichnet, dass** die Wandprofile (1) in Längsrichtung des Profils Hohlkammern unterschiedlicher Geometrie aufweisen.

4. Kabelschacht nach Anspruch 1, **dadurch gekennzeichnet, dass** mehrere Wandprofile (1) mittels der Eckelemente (2) und der Verbindungselemente (3) horizontal übereinander montiert sind.

5. Kabelschacht nach Anspruch 1, **dadurch gekennzeichnet, dass** die Eckelemente (2) und die Verbindungselemente (3) durch Befestigungsklammern (5) längskraftschlüssig fixiert sind.

6. Kabelschacht nach Anspruch 1, **dadurch gekennzeichnet, dass** mindestens zwei Wandprofile an den Ecken durch Schweißen oder Kleben verbunden sind.

7. Kabelschacht nach Anspruch 1, **dadurch gekennzeichnet, dass** die Wandprofile (1) durch Verstärkungsprofile (6) versteift sind.

8. Kabelschacht nach Anspruch 3, **dadurch gekennzeichnet, dass** die Wandprofile (1) durch Verstärkungsprofile (6) versteift sind, die in eine oder mehrere der horizontalen Hohlkammern der Wandprofile (1) eingeschoben sind.

9. Kabelschacht nach Anspruch 7 und 8, **dadurch gekennzeichnet, dass** die Verstärkungsprofile (6) aus Kunststoff oder einem anderen Werkstoff ausgeführt sind.

10. Kabelschacht nach Anspruch 1, **dadurch gekennzeichnet, dass** der Kabelschacht mit einer Bodenplatte (4) ausgestattet ist.

11. Kabelschacht nach mindestens einem der vorangegangenen Ansprüche, **dadurch gekennzeichnet, dass** die Wandprofile (1) zur Kraftübertragung und zur verschiebesicheren Ausrichtung übereinander und auf der Bodenplatte (4) mit einem Anschlag (7) versehen sind.

12. Kabelschacht nach mindestens einem der vorangegangenen Ansprüche, **dadurch gekennzeichnet, dass** das Eckelement (2) über mindestens zwei horizontale Einsteckprofile (9) verfügt, die um 90° versetzt zueinander über Eck angeordnet sind.

13. Kabelschacht nach mindestens einem der vorangegangenen Ansprüche, **dadurch gekennzeichnet, dass** das Eckelement (2) je oben und unten eine Öffnung mit Positionszentrierung (10) aufweist.

14. Kabelschacht nach mindestens einem der vorangegangenen Ansprüche, **dadurch gekennzeichnet, dass** das Eckelement (2) in einer Öffnung eine innen liegende Nut (11) zur Verbindung mit einem Schnappverschluss (18) des Verbindungselementes (3) aufweist.

15. Kabelschacht nach mindestens einem der vorangegangenen Ansprüche, **dadurch gekennzeichnet, dass** das Eckelement (2) ein Innengewinde (12) zur Aufnahme einer Stellschraube (20) zur Höhenregulierung eines Ausgleichsrahmens (19) aufweist.

16. Kabelschacht nach mindestens einem der vorangegangenen Ansprüche, **dadurch gekennzeichnet, dass** das Eckelement (2) an seinen Außenflächen mit mindestens einem Steckschlitz (14) zum Einstecken einer oder mehrerer Befestigungsklammern (5) ausgestattet ist.

17. Kabelschacht nach mindestens einem der vorangegangenen Ansprüche, **dadurch gekennzeichnet, dass** zwei Eckelemente (2) durch ein Verbindungselement (3) verbunden sind.

18. Kabelschacht nach mindestens einem der vorangegangenen Ansprüche, **dadurch gekennzeichnet**, das ein Eckelement (2) und ein Verbindungselement (3) als ein Teil gefertigt sind.

19. Kabelschacht nach mindestens einem der vorangegangenen Ansprüche, **dadurch gekennzeichnet, dass** das Verbindungselement (3) oben eine zum Eckelement (2) unten passende Geometrie (15) aufweist.

20. Kabelschacht nach mindestens einem der vorangegangenen Ansprüche, **dadurch gekennzeichnet, dass** das Verbindungselement (3) unten eine zum Eckelement (2) oben passende Geometrie (16) aufweist.

21. Kabelschacht nach mindestens einem der vorangegangenen Ansprüche, **dadurch gekennzeichnet, dass** das Verbindungselement (3) mit mindestens einem Steckschlitz (17) zum Einstecken einer oder mehrerer Befestigungsklammern (5) ausgestattet ist.

22. Kabelschacht nach mindestens einem der vorangegangenen Ansprüche, **dadurch gekennzeichnet, dass** das Verbindungselement (3) zur Verbindung mit dem Eckelement (2) einen Schnappverschluss (18) aufweist.
